# EUROPEAN PATENT APPLICATION

(11) **EP 1 351 376 A1**
(43) Date of publication of application: **08.10.2003**
(21) Application number: 02425134.0
(22) Date of filing: 11.03.2002
(51) Int. Cl.: H02P 6/20, H02P 6/00

(54) **Electronic device for starting and controlling a permanent-magnet synchronous motor**

(71) Applicant: Askoll Holding S.r.l., 36031 Dueville (IT)
(72) Inventor: Marioni, Elio, 36031 Dueville (Prov. of Vicenca) (IT)
(74) Representative: Botti, Mario

(57) **Abstract**

An electronic device for starting and controlling a permanent-magnet synchronous motor, comprising logic control means (2), at least one switch (3) arranged in series between an external power source (4) and a permanent-magnet synchronous motor (5), and sensor means (6) suitable to determine the polarity and position of the rotor of the motor, the logic control means (2) being suitable to send a driving signal (9) to the at least one switch (3) as a function of a position signal that arrives from the sensor means (6) and of a synchronization signal that arrives from the external power source, the logic control means (2) comprising processing and filtering means (12) that are suitable to determine a phase shift of the position signal as a function of the rotation rate of the rotor and of the specific application.

## Description

The present invention relates to an electronic device for starting and controlling a permanent-magnet synchronous motor.

As is known, a synchronous motor is a high-efficiency motor that as such allows a lower electric power consumption for an equal mechanical power delivered at its shaft.

Moreover, the embodiment of the single-phase synchronous motor with a tuning fork-like stator and a permanent-magnet rotor, which in addition to being economically advantageous from an energy standpoint is also advantageous from the point of view of the manufacturing process, is well-known for fractional power levels.

A drawback of this type of motor is that it can be of the self-starting type only within certain power limits, with some refinements and in certain applications.

Specific electronic circuits are available for starting a single-phase synchronous motor of the tuning-fork type with permanent-magnet rotor. These circuits detect the position of the rotor by means of an appropriate sensor and a suitable logic system or circuit, which controls a static switch in order to decide whether to supply or not the stator winding depending on the polarity of the power distribution grid voltage at that specific instant, accordingly allowing to generate a stator flux that produces a unidirectional torque, suitable to start the rotor in a specific direction until the synchronous speed is reached and maintained.

In these circuits, in order to optimize the maximum torque value during the transient, the position signal is processed in order to adapt its phase shift to the rotation rate, so as to compensate for the phase shift that occurs between the external power supply voltage and the current, which has the same phase as the stator flux.

A phase shift circuit is provided in order to perform this phase shift.

The above cited background art is disclosed in EP-0574823 by the same Applicant.

Without the phase shift circuit, one would run the risk of closing the static switch in optimum theoretical conditions (position and polarity of the voltage of the power distribution grid), but not in the real ones (position and current), causing torques that initially have the wrong direction, with lower average half-period and period torques; motor starting would therefore be compromised for high loads.

For an equal motor, the phase shift circuit increases the torque available at the shaft during starting, allowing to drive greater loads.

Another solution that allows to compensate for phase shifts between stator current and voltage in the various situations is the placement of the sensor suitable to detect the position of the rotor in an appropriate position at a given angle, so as to allow a good starting torque during the transient and operation with an equally adequate load driving torque during synchronous operation.

This angle must be chosen carefully on the basis of the knowledge of the moments of inertia of the rotor and of the load connected thereto and on the basis of the contrasting torque of the load.

The first mentioned solution, i.e., the use of a phase shift circuit produced with passive and/or active electronic components, has the drawback that these electronic components have tolerances, in their nominal values, that are intrinsic in their manufacture and are further altered by the assembly processes; their combination leads to performance variations whose modulus and phase are so great as to prevent their effective use.

Further, such electronic components have time- and temperature-dependent drifts in their nominal values, further limiting the usable production range.

The second solution cited above, i.e., placing the sensor at an appropriate angle, entails the possibility, albeit an unlikely one, of adopting unsuitable positions due to disperse fluxes and constructive complexity, and therefore entails the need to choose compromise angles, with consequent limitations in starting voltage or load or boundary conditions in application, such as great temperature variations.

The aim of the present invention is to provide an electronic device for starting and controlling a permanent-magnet synchronous motor that allows to eliminate the risk of tolerances due to the passive and/or active electronic components that constitute the phase shift circuit.

Within this aim, an object of the present invention is to provide an electronic device for starting and controlling a permanent-magnet synchronous motor that is stable over time and has a smaller number of components.

Another object of the present invention is to provide an electronic device for starting and controlling a permanent-magnet synchronous motor that allows to reduce the risk of noise and undesirable operation of the device.

Another object of the present invention is to provide an electronic device for starting and controlling a permanent-magnet synchronous motor that allows to render the optimum operation of the device independent of the position of the sensor with respect to the rotor of the motor.

Another object of the present invention is to provide an electronic device for starting and controlling a permanent-magnet synchronous motor that allows optimum utilization of the electrical and physical possibilities of the motor, without the need to choose compromise angles and with consequent limitations in terms of starting voltages or in the load or in the boundary conditions in application, such as large temperature variations.

Another object of the present invention is to provide an electronic device for starting and controlling a permanent-magnet synchronous motor that is highly reliable, relatively simple to produce and at competitive costs.

This aim and these and other objects that will become better apparent hereinafter are achieved by an electronic device for starting and controlling a permanent-magnet synchronous motor, comprising logic control means, at least one switch arranged in series between an external power source and a permanent-magnet synchronous motor, and sensor means suitable to determine the polarity and position of the rotor of said motor, said logic control means being suitable to send a driving signal to said at least one switch as a function of a position signal that arrives from said sensor means and of a synchronization signal that arrives from said external power source, characterized in that said logic control means comprise processing and filtering means that are suitable to determine a phase shift of said position signal as a function of the rotation rate of said rotor and of the specific application.

Further characteristics and advantages of the invention will become better apparent from the description of preferred but not exclusive embodiments of the electronic device according to the present invention, illustrated only by way of non-limitative example in the accompanying drawings, wherein:
Figure 1 is a block diagram of the electronic device according to the present invention; and
Figure 2 is a block diagram of a portion of the electronic device according to the present invention.

With reference to the figures, the electronic device according to the present invention is described with an initial brief preamble regarding the starting of a single-phase synchronous motor.

It is known that single-phase synchronous motors are self-starting when the starting torque is sufficient to turn the coupled load in a short time until the synchronous speed is reached before the subsequent current half-wave generates a field that stalls the rotor.

The ratio between the inertia and the contrasting torque of the load and the torque generated at starting determines the capacity of a motor to be self-starting, without other mechanical contrivances.

This problem can be solved by using a position sensor that provides a suitably amplified signal to a logic control system. This logic system is also provided with a power distribution grid synchronization signal and controls a static switch.

The static switch is switched on according to the polarity of the rotor and of the supply voltage, which generates a stator field so as to have a unidirectional torque.

When the rotor is not moving and the stator is powered, the current is practically in phase with the voltage and the optimum rotor field monitoring point is clearly determined.

In the synchronous state, instead, owing to the phase shift of the current (and therefore of the stator field) with respect to the voltage, in order to avoid switching on the stator field in incorrect conditions, obtaining opposite torques and sometimes even causing reverse rotation, the optimum rotor position monitoring point must shift with an appropriate advance or delay with respect to the direction of rotation of the motor.

This angle varies according to the application, since it depends on the applied load and on the rotation rate of the motor.

If this translational motion is controlled on the basis of the frequency of the signal acquired by the position sensor (which is proportional to the rotation rate), it is possible to optimize the starting transient between when the rotor is motionless (frequency = 0) until it reaches the synchronous speed (power distribution grid frequency).

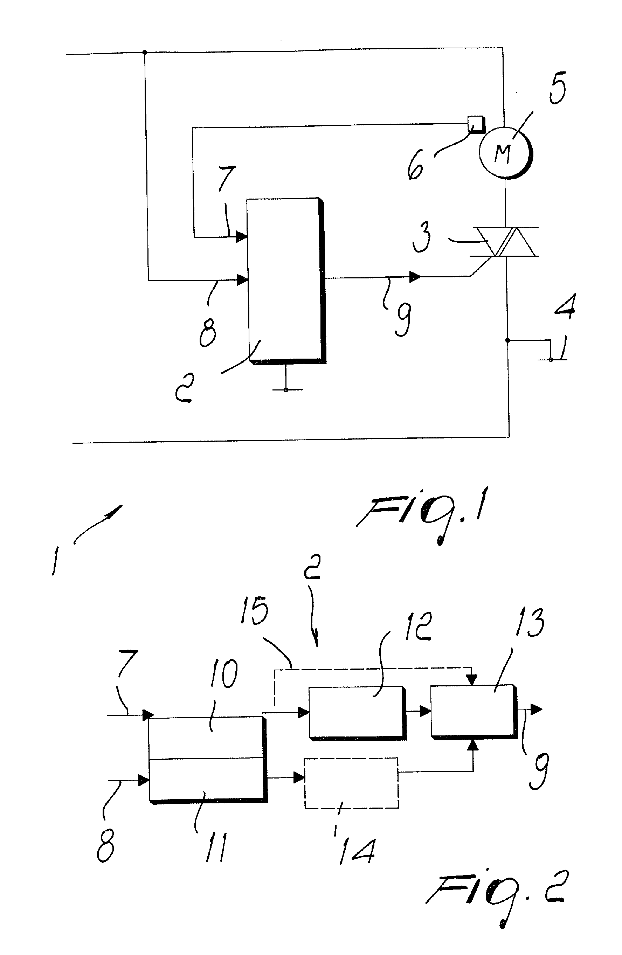

The device for starting and controlling a permanent-magnet synchronous motor according to the present invention is now described with reference to Figure 1.

The electronic device, generally designated by the reference numeral 1, comprises logic control means 2 for a static power switch, such as for example a triac, designated by the reference numeral 3, which are arranged in series between an external AC power source 4 and a permanent-magnet synchronous motor 5. Sensor means 6 determine the polarity and position of the permanent-magnet rotor of the synchronous motor 5 when it is rotating, stalled or in the inactive condition at zero speed.

The output signal of the sensor means 6 enters the logic control means 2 by way of an input 7, while a second signal that enters the logic control means 2 is constituted by the voltage of the external electrical power source 8.

The logic control means 2 determine, by means of an appropriate output signal 9, the opening or closing of the static switch 3 connected in series to the motor 5.

Conveniently, the sensor means 6 can be of the Hall-effect type.

Accordingly, as explained, the input of the logic control means 2 is constituted by the signal of the position sensor means 6 and the power distribution grid synchronization signal, and the output of said logic control means is a command for the static switch 3.

The logic control means 2 conveniently comprise quantization means suitable to quantize the position signal 7 that arrives from the sensor means 6 and the synchronization signal 8 of the external power distribution grid. The quantization means, conveniently designated by the reference numerals 10 and 11 for the position signal 7 and the synchronization signal 8 respectively, are required in order to allow the control logic means 2 to process the signals in numeric form.

The quantization means 10 and 11 discretize the signals 7 and 8 into Nq levels, where Nq can vary from 2 to a maximum value that depends on the type of quantizer used.

The output of the quantization means 10 is sent to processing and filtering means 12, which in turn emit a signal to logic means 13 that also receive the output of the quantization means 11, with the optional interposition of antinoise filter means 14.

The antinoise filter means 14 eliminate from the synchronization signal 8 pulsed noise that might alter the correct operation of the logic means 13. The antinoise filter means 14 might not be necessary, depending on the type of quantization means 11 used or depending on the application, for example if there is already an antinoise filter connected to the external power distribution grid. The antinoise filter means 14 can be inserted upstream of the quantization means 11 or downstream of them, as shown in Figure 2.

The logic means 13 enable control of the motor by means of the signal 9 sent to the static switch 3, check the stalling of the rotor by means of a signal 15 that arrives from the quantization means 10, and start a sequence that can include attempts to restart the motor and/or the complete stalling of the motor. Moreover, the logic means 13 optimize the switching-on signal 9 of the static switch for controlling the motor, allowing to use various types of switch and/or optimizing the consumption of current required by the auxiliary power supply.

Substantially, the logic means 13 perform an XOR function between the position signal 7 and the synchronization signal 8 emitted respectively by the processing and filtering means 12 and by the quantization means 11 directly or indirectly by way of the antinoise filter means 14.

The processing and filtering means 12 are responsible for producing the phase shift of the position signal 7 so as to be able to control the static switch 3 in an optimum manner in ideal situations. This phase shift depends on the rotation rate and on the application. The processing and filtering means 12 are therefore optimized in order to obtain from the motor the maximum torque required in every specific situation.

Conveniently, the processing and filtering means 12 can be provided in various manners, such as:
-- a digital numeric filter of the IIR or FIR type;
-- a state machine with a transfer function referable to an equivalent numeric filter;
-- a fuzzy-logic filter with a transfer function referable to an equivalent numeric filter;
-- a scan table based on the phase shifts or amplitudes of the two input signals;
-- any concatenation of the above cited filters.

The above cited processing and filtering means, in their various embodiments, can be provided by way of programmable logic devices, with software algorithms, or with distributed-logic components.

The above described electronic device for starting and controlling a permanent-magnet synchronous motor, which implements logic control means 2 as shown in Figure 2, allows to start and control in an optimum manner a single-phase synchronous motor with a very small number of components.

The limited number of components reduces considerably the possibilities of failure, and the elimination of the provision of the phase shift circuit and of the filtering circuits with active and passive analog components eliminates all rejects due to intrinsic production- and assembly process-related tolerances.

Further, the possibilities of failure during use caused by time- and temperature-related drifts of said active and passive analog components are completely eliminated.

Utilization of the motor is optimized, and it is possible to extend operation into thermally stressful conditions and especially over time, since there are no degradations and it is possible to implement protective algorithms in the logic means 13, such as the prevention of malfunctions or damaging operating modes, such as a stalled rotor or dry operation, for example in the case of pumps.

The processing and filtering means 12 can also provide for physical placements of the position sensing means 6 at angles that would be difficult or impossible to compensate for by means of the analog phase shift networks used in the prior art.

This allows to place the sensor means 6 in positions that are ideal for an industrial process or distant from dispersed fluxes or in any case wherever possible if, due to mechanical space occupation or small geometric dimensions, the most suitable position is not free or accessible.

In practice, it has been observed that the electronic device according to the present invention fully achieves the intended aim and objects, since it allows to reduce considerably the number of components of the device by using a rotor position signal in analog or digital form and an external power distribution grid synchronization signal that is also in analog or digital form.

The use of the processing and filtering means allows to phase-shift the position signal for optimum control of the static switch; said phase shift depends on the rotation rate of the rotor of the permanent-magnet motor and on the application, in order to obtain from the motor the maximum torque required in the specific situation.

The device thus conceived is susceptible of numerous modifications and variations, all of which are within the scope of the inventive concept; all the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An electronic device for starting and controlling a permanent-magnet synchronous motor, comprising logic control means, at least one switch arranged in series between an external power source and a permanent-magnet synchronous motor, and sensor means suitable to determine the polarity and position of the rotor of said motor, said logic control means being suitable to send a driving signal to said at least one switch as a function of a position signal that arrives from said sensor means and of a synchronization signal that arrives from said external power source, **characterized in that** said logic control means comprise processing and filtering means that are suitable to determine a phase shift of said position signal as a function of the rotation rate of said rotor and of the specific application.

2. The device according to claim 1, **characterized in that** said processing and filtering means comprise a digital numeric filter.

3. The device according to claim 1, **characterized in that** said processing and filtering means comprise a state machine with a transfer function referable to an equivalent numeric filter.

4. The device according to claim 1, **characterized in that** said processing and filtering means comprise a fuzzy-logic filter.

5. The device according to claim 1, **characterized in that** said processing and filtering means comprise a scan table.

6. The device according to one or more of the preceding claims, **characterized in that** said logic control means comprise quantization means that are suitable to quantize said position signal and said synchronization signal.

7. The device according to one or more of the preceding claims, **characterized in that** it comprises antinoise filter means arranged upstream of said quantization means.

8. The device according to one or more of the preceding claims, **characterized in that** it comprises antinoise filter means arranged between said quantization means and said logic means.

9. The device according to one or more of the preceding claims, **characterized in that** said logic means provide an XOR function between said position signal and said synchronization signal.
